# EUROPÄISCHE PATENTSCHRIFT

(11) **EP 0 594 997 B1**
(45) Veröffentlichungstag und Bekanntmachung des Hinweises auf die Patenterteilung: **08.11.1995**
(21) Anmeldenummer: 93114636.9
(22) Anmeldetag: 11.09.1993
(51) Int. Cl.: B64D 11/00

(54) **Überkopf-Gepäckablage mit absenkbarer Schale, insbesondere zur Anwendung in Passagierflugzeugen**
Overhead stowage with downwardly extendable bin for use in passenger airplane
Dispositif de rangement en tête avec coffre basculable utilisé dans les avions à passagers

(30) Priorität: 28.10.1992 DE 9214592 U
(43) Veröffentlichungstag der Anmeldung: 04.05.1994
(73) Patentinhaber: Daimler-Benz Aerospace Airbus Gesellschaft mit beschränkter Haftung, 21129 Hamburg (DE)
(72) Erfinder: Harriehausen, Michael, D-226529 Hamburg (DE); Kasch, Dieter, D-21614 Buxtehude (DE); Manthey, Heinz, D-21077 Hamburg (DE)
(74) Vertreter: Hansmann, Dierk, Dipl.-Ing.

(56) Entgegenhaltungen:
- GB-A- 1 556 752
- US-A- 4 275 942

## Beschreibung

Die Erfindung betrifft eine Überkopf-Gepäckablage mit absenkbarer Schale, insbesondere zur Anwendung in Passagierflugzeugen, mit einem kastenförmigen Gehäuse, das nach unten offen ist und zwei Seitenwände aufweist, und einer Schale, die durch je ein, beidseitig an den Seitenwänden der Schale angeordnetes Führungssystem mit den Seitenwänden des Gehäuses verbunden ist, wobei die Schale ausschwenkbar ist und eine Absenk- und eine leichte Kippbewegung realisiert, und für jedes Führungssystem eine Federeinrichtung vorgesehen ist.
Mit einer derartigen Überkopf-Gepäckablage mit absenkbarer Schale wird einerseits erreicht, daß in geschlossener Stellung die Bewegungsfreiheit der Passagiere nicht eingeschränkt wird und andererseits in offener Beladestellung das Ablegen und Entnehmen von Gepäck bequem möglich ist.

Aus der US-PS 4 275 942 ist eine Überkopf-Gepäckablage mit einer absenkbaren Schale zur Aufnahme des Gepäcks bekannt. Dabei ist die Schale innerhalb eines nach unten offenen, zwei Seitenwände aufweisenden` kastenförmigen Gehäuses über zwei Gelenkvierecke so mit den Seitenwänden verbunden, daß sie aus ihrer geschlossenen Staustellung nach unten in eine offene Beladestellung ausschwenkbar ist.

Das jeweilige Gelenkviereck wird durch einen Oberhebel und einen Unterhebel gebildet, wobei die Gelenkpunkte zum Anschluß dieser beiden Hebel an die jeweilige Seitenwand in deren Fronthereich annähernd vertikal übereinander angeordnet sind. Beim Ausschwenken in die offene Stellung führt die Schale eine Koppelbewegung aus. Die schalenseitigen Gelenkpunkte sind so gewählt, daß die Beladeöffnung der in ihre offene Stellung abgesenkten und geschwenkten Schale voll zugänglich ist. Dabei liefert eine Gasfeder eine Unterstützungskraft, die dem Gewicht der Zuladung entgegenwirkt und damit den Schließvorgang unterstützen soll. Diese Gasfeder wirkt auf den Oberhebel und stützt sich gegen den gehäusefesten Gelenkpunkt des Unterhebels ab.
Je Gelenkviereck ist eine Zwischeneingriffsvorrichtung vorgesehen, die eine Anschlagoberfläche auf dem Unterhebel und auf dem Oberhebel einen gabelförmigen Greifer aufweist. Sie dient zum Begrenzen einer weiteren Abwärtsbewegung der Schale und zum Sichern einer gewissen Steifigkeit und Stabilität bei seitlicher Belastung in der untersten Position der Schale.
Diese bekannte Lösung realisiert den Absenkmechanismus der Schale mit acht Anschlußpunkten, und zwar an den beiden Schalenseiten je zwei am Gehäuse und zwei an der Schale. Gerade diese Anschlußpunkte müssen die gesamten Kräfte, die durch das Gewicht der absenkbaren Schale, des Beladungsgewichts und der Betätigungskraft der Passagiere auftreten, aufnehmen und müssen somit einer starken Beanspruchung standhalten. Eine entsprechende Ausbildung solcher Anschlußpunkte erfordert einen hohen Aufwand an Montage und Wartung, um eine Befestigung an den Seitenwänden des Gehäuses oder der Schale zu realisieren. Die Seitenwände und auch die Schale sind an den Anschlußstellen zu verstärken, was einen zusätzlichen Herstellungsaufwand bedeutet. Dieser Lösung haftet demzufolge der Nachteil an, daß für die acht Anschlußpunkte je Schale in der Herstellung, der Montage und der Wartung ein hoher Aufwand besteht.

Der Erfindung liegt daher die Aufgabe zugrunde, für eine Überkopf-Gepäckablage mit einer absenkbaren Schale ein Führungssystem zu schaffen, daß mit einer Mindestarzahl von vier Anschlußpunkten an Gehäuse und Schale versehen ist und so den Herstellungs-, Montage- und Wartungsaufwand auf ein Minimum reduziert.

Diese Aufgabe wird bei einer gattungsgemäßen Gepäckablage gemäß der Erfindung dadurch gelöst, daß das Führungssystem besteht aus einem Hebel, einem Zahnrad, welches drehbar an fester Position mit dem Hebel verbunden ist und mit seinem Mittelpunkt auf der Verbindungslinie der beiden Anschlußpunkte des Hebels liegt, einem Zahnsegment, welches starr mit dem Gehäuse verbunden ist und mit dem Mittelpunkt seiner Verzahnung den gehäuseseitigen, drehbaren Anschlußpunkt des Hebels bestimmt, und einem weiteren Zahnsegment, welches starr mit der Schale verbunden ist und mit dem Mittelpunkt seiner Verzahnung den schalenseitigen, drehbaren Anschlußpunkt des Hebels definiert, wobei das Zahnrad so auf der Verbindungslinie der Anschlußpunkte des Hebels angeordnet ist, daß es mit dem gehäuseseitigen Zahnsegment und mit dem schalenseitigen Zahnsegment in Eingriff steht.

Dabei ist insbesondere von Vorteil, daß für eine Überkopf-Gepäckablage mit absenkbarer Schale ein Führungssystem mit nur einem Hebel 5 realisiert ist und im Gegensatz zum bekannten Stand der Technik nur vier Anschlußpunkte vorhanden sind, was eine wesentliche Verringerung des Herstellungs-, Montage- und Wartungsaufwandes bedeutet.

Weiterbildungen und zweckmäßige Ausgestaltungen ergeben sich aus den Unteransprüchen 2 bis 5.

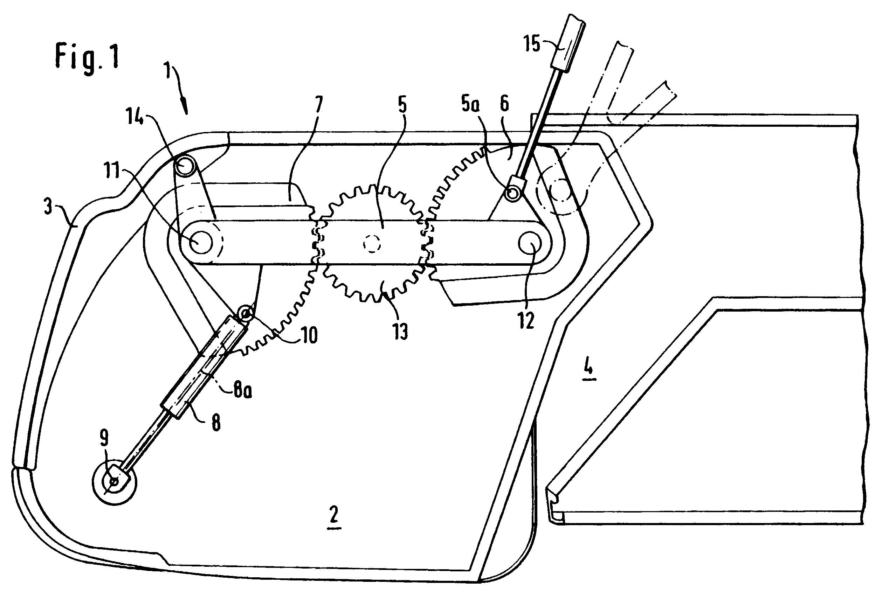

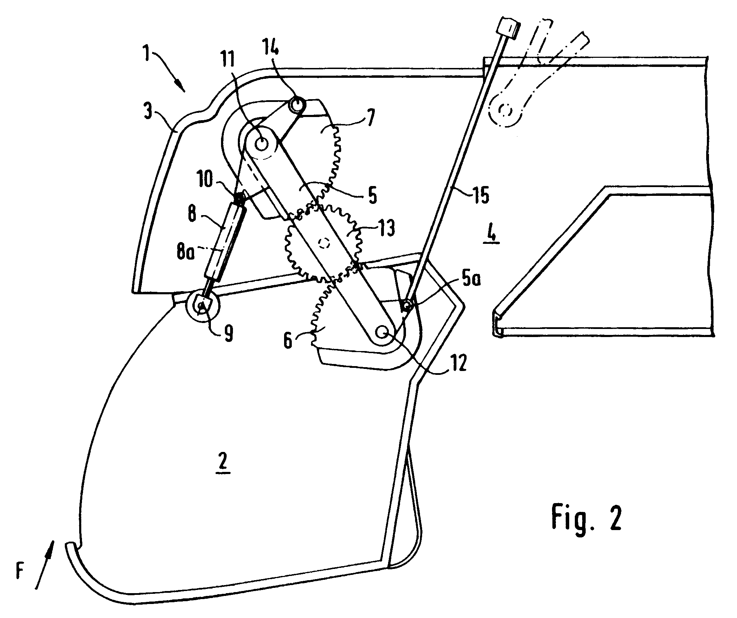

Die Erfindung wird nachstehend anhand der Figuren 1 und 2 näher erläutert.

Es zeigen:
- Fig. 1: eine Überkopf-Gepäckablage mit absenkbarer Schale in geschlossener Stellung und
- Fig. 2: eine Überkopf-Gepäckablage mit absenkbarer Schale in offener Beladestellung.

Fig. 1 zeigt eine Gepäckablage 1 in geschlossener Staustellung. Von dieser symmetrisch aufgebauten Gepäckablage ist nur die eine Hälfte gezeigt. Die gesamte Gepäckablage weist eine Vielzahl dieser Schalen 2 auf, wovon jede zwischen zwei Seitenwänden 4 angeordnet ist. Die Seitenwände 4 bilden mit den übrigen Wandungen der Gepäckablage 1 ein Gehäuse 3 zur Aufnahme einer Schale 2. Jede Schale 2 ist mit den Seitenwänden 4 durch zwei Führungssysteme von identischem Aufbau verbunden.

Dieses Führungssystem besteht aus einem Hebel 5, der mit einem gehäuseseitigen Anschlußpunkt 11 an der Seitenwand 4 und mit einem schalenseitigen Anschlußpunkt 12 an der Schale 2 drehbar befestigt ist. Ein Zahnrad 13 ist auf dem Hebel 5 drehbar angeordnet und mit seinem Mittelpunkt auf der Verbindungslinie der beiden Anschlußpunkte 11 und 12 fest positioniert. Ein starr am Gehäuse 3 befestigtes Zahnsegment 7 ist gleichzeitig mit dem Mittelpunkt seiner Verzahnung der gehäuseseitige Anschlußpunkt 11 des Hebels 5. Es ist mit dem auf dem Hebel 5 fest positionierten, drehbaren Zahnrad 13 stets in Eingriff. Gleichzeitig greift das Zahnrad 13 in ein weiteres Zahnsegment 6 ein, welches starr mit der Schale 2 verbunden ist und dessen Mittelpunkt seiner Verzahnung den schalenseitigen Anschlußpunkt 12 des Hebels 5 bestimmt.
Zur Unterstützung der Handkraft eines Passagiers beim Schließvorgang ist eine Gasfeder 8 im Führungssystem so angeordnet, daß sie dem Gewicht der Schale und der Beladung entgegenwirkt und somit das Schließen erleichtert. Dafür hat die Gasfeder 8 einen gehäusefesten Drehpunkt 9 und wirkt auf den Hebel 5 am Drehpunkt 10. Dieser Drehpunkt 10 ist so gewählt, daß sich die Wirkungslinie 8a der Federkraft in Beladestellung dem gehäuseseitigen Anschlußpunkt 11 soweit annähert, daß ein selbstätiges Schließen der Schale bei Beladestellung verhindert wird.
In geschlossener Staustellung der Gepäckablage 1 liegen die Anschlußpunkte 11 und 12 annähernd in horizontaler Ebene. Die Gasfeder 8 hat mit ihrer Wirkungslinie 8a in dieser Position den größten Abstand zum gehäuseseitigen Anschlußpunkt 11. Mit dem Herunterschwenken der Schale 2 wird über das Zahnsegment 7, dem Zahnrad 13, verbunden mit dem Hebel 5, und dem weiteren Zahnsegment 6 eine Absenk- und gleichzeitig eine leichte Schwenkbewegung nach vorn realisiert. In der dargestellten Ausführung ist dies mit einem Radienverhältnis des gehäuseseitigen Zahnsegmentes 7 zum schalenseitigen Zahnsegment 6 von annähernd 1,2 erreicht. Um in weiteren Ausführungsformen eine andere Absenkbewegung der Schale zu realisieren, ist eine Veränderung des Radienverhältnisses der Zahnsegmente 6 und 7 möglich. Das Zahnrad 13 ist mit seinem Mittelpunkt dementsprechend auf der Verbindungslinie der Anschlußpunkte 11 und 12 des Hebels 5 zu verschieben.
Mit zunehmendem Absenken verringert sich der senkrechte Abstand zwischen der Wirkungslinie 8a der Federkraft und dem Anschlußpunkt 11 bis annähernd zum Wert Null. Damit ein selbsttätiges Schließen der Schale 2 verhindert wird, bevor ein Beladen stattgefunden hat, hält die Schale 2 automatisch in der Beladestellung. Dafür ist vorgesehen, daß durch entsprechende Kinematik die Wirkungslinie 8a der Federkraft den gehäuseseitigen Anschlußpunkt 11 zumindest erreicht und darüber hinaus geht und somit ein umgekehrtes Moment wirkt, wie in Fig. 2 dargestellt. Dieses Umkehrmoment darf nur einen kleinen Wert annehmen, da es beim Schließvorgang durch die Betätigungskraft des Passagieres überwunden werden muß. Eine weitere vorteilhafte Ausbildung ist möglich, in der sich die Wirkungslinie 8a der Federkraft gerade soweit dem Anschlußpunkt 11 annähert, daß sich das entstehende Moment und das Eigengewicht der Schale 2 gerade noch nicht aufhebt und ein Hochlaufen der Schale verhindert wird.
In dieser Endposition der Schale 2 der Gepäckablage 1, die in Fig. 2 dargestellt ist, ist nun ein Beladen bzw. Entladen der Schale 2 möglich. Soll die Schale 2 nach beendeter Beladung geschlossen werden, bewirkt eine, die Schale nach oben drückende Handkraft F, daß die Wirkungslinie 8a der Federkraft den Anschlußpunkt 11 überschreitet und sich von ihm entfernt. Dadurch vergrößert sich der Hebelarm und es entsteht ein ansteigendes Moment, daß das Hochschwenken der Schale 2 unterstutzt und eine nach oben ansteigende Kraftunterstützung liefert. Entsprechend dem Gewicht der Zuladung wird ein Teil oder weitgehend die gesamte notwendige Betätigungskraft von der Gasfeder aufgebracht.
Um dabei ein zu schnelles Hochschwenken der Schale zu vermeiden, ist ein stoßdämpfendes Element 15, welches zwischen dem schalenseitigen Ende des Hebels 5 am Auge 5a und einem relativ zum Gehäuse fest fixierten Punkt wirkt, eingesetzt. Dieses stoßdämpfende Element 15 läßt ebenfalls nur eine bestimmte Abwärtsgeschwindigkeit der Schale 2 zu, da sonst bei voll beladener Schale ein zu schnelles Absenken erfolgt.

Mittels eines Gleichlaufstabes 14, der die beiden Führungssysteme an den beiden Seiten der Schale 2 verbindet, ist ein Gleichlauf von linker und rechter Kinematikseite gegeben, der verhindert, daß sich die Schale 2 beispielsweise bei untergleichmäßiger Beladung links und rechts unterschiedlich absenkt.

Die mit der Erfindung erzielbaren Vorteile bestehen insbesondere darin, daß für eine Überkopf-Gepäckablage mit absenkbarer Schale ein Führungssystem mit nur einem Hebel 5 realisiert ist und im Gegensatz zum bekannten Stand der Technik nur vier Anschlußpunkte vorhanden sind. Somit ist die Anzahl der Anschlußpunkte der erfindungsgemäßen Lösung auf ein Minimum reduziert, was eine wesentliche Verringerung des Herstellungs-, Montage- und Wartungsaufwandes bedeutet. Denn gerade die Anschlußpunkte an der Seitenwand 4 und der Schale 2 müssen einer starken Beanspruchung standhalten und entsprechend ausgebildet sein und die Anschlußstellen an der Seitenwand 4 und Schale 2 müssen verstärkt sein.

Ein weiterer Vorteil besteht darin, daß im Beladezustand mit abgesenkter Schale keine Kinematikbauteile zu sehen sind und somit auch gestalterische Anforderungen eingehalten werden.

## Patentansprüche

1. Überkopf-Gepäckablage (1) mit absenkbarer Schale, insbesondere zur Anwendung in Passagierflugzeugen, die folgende Merkmale umfaßt:
- ein kastenförmiges Gehäuse (3), das nach unten offen ist und zwei Seitenwände (4) aufweist,
- die Schale (2), die durch je ein, beidseitig an den Seitenwänden der Schale angeordnetes Führungssystem mit den Seitenwänden des Gehäuses verbunden ist, wobei die Schale ausschwenkbar ist und eine Absenk- und eine leichte Kippbewegung realisiert und
- für jedes Führungssystem eine Federeinrichtung vorgesehen ist,
**dadurch gekennzeichnet, daß**
- das Führungssystem aus einem Hebel (5), einem Zahnrad (13), welches drehbar, an fester Position mit dem Hebel (5) verbunden ist und mit seinem Mittelpunkt auf der Verbindungslinie der beiden Anschlußpunkte (11, 12) des Hebels (5) liegt, einem Zahnsegment (7), welches starr mit dem Gehäuse (3) verbunden ist und mit dem Mittelpunkt seiner Verzahnung den gehäuseseitigen, drehbaren Anschlußpunkt (11) des Hebels (5) bestimmt, und einem weiteren Zahnsegment (6), welches starr mit der Schale (2) verbunden ist und mit dem Mittelpunkt seiner Verzahnung den schalenseitigen, drehbaren Anschlußpunkt (12) des Hebels (5) definiert, besteht und
- das Zahnrad (13) so auf der Verbindungslinie der Anschlußpunkte (11, 12) des Hebels (5) angeordnet ist, daß es mit dem gehäuseseitigen Zahnsegment (7) und mit dem schalenseitigen Zahnsegment (6) in Eingriff steht.

2. Überkopf-Gepäckablage mit absenkbarer Schale nach Anspruch 1,
**dadurch gekennzeichnet, daß**
- die Federeinrichtung mit einem unteren gehäusefesten Drehpunkt (9) und einen oberen, am Hebel (5) befestigten Drehpunkt (10) im Führungssystem integriert ist, wobei der obere Drehpunkt (10) bei Beladestellung der Schale (5) in der Nähe der Wirkungslinie (8a) der Federkraft liegt.

3. Überkopf-Gepäckablage mit absenkbarer Schale nach Anspruch 2,
**dadurch gekennzeichnet, daß**
- als Federeinrichtung eine Gasfeder (8) vorgesehen ist.

4. Überkopf-Gepäckablage mit absenkbarer Schale nach Anspruch 1 bis 3,
**dadurch gekennzeichnet, daß**
- die beidseitig der Schale angeordneten Führungssysteme mittels eines Gleichlaufstabes (14) miteinander verbunden sind.

5. Überkopf-Gepäckablage mit absenkbarer Schale nach Anspruch 1 bis 4,
**dadurch gekennzeichnet, daß**
- ein stoßdämpfendes Element (15) zwischen dem schalenseitigen Ende des Hebels (5) und einem relativ zum Gehäuse (3) fest fixierten Punkt wirksam ist.

## Claims

1. Overhead luggage storage compartment (1) with a lowerable tray, particularly for use in passenger aircraft, having the following characteristics:
- a downwardly open box-type housing (3) having two side walls (4),
- the tray (2), which is connected to the side walls of the housing by means of guide systems disposed on either side of the side walls of the tray, the tray being capable of being swivelled outwards and there being lowering and slight tilting motion, and
- there is a spring device for each guide system,
characterized in that
- the guide system consists of a lever (5), a toothed wheel (13) which is connected in a fixed position to the lever (5) so that it is capable of rotation, its mid-point being located on the connecting line between the two connecting points (11, 12) of the lever (5), a toothed segment (7) which is rigidly connected to the housing (3), the mid-point of its toothing defining the rotatable connection point (11) of the lever (5) on the housing end, and a further toothed segment (6) which is rigidly connected to the tray (2), the mid-point of its toothing defining the rotatable connection point (12) of the lever (5) on the tray end, and
- the toothed wheel (13) is disposed on the connecting line between the connecting points (11, 12) of the lever (5) so that it engages with the toothed segment (7) on the housing end and with the toothed segment (6) on the tray end.

2. Overhead luggage storage compartment with a lowerable tray according to Claim 1, characterized in that
- the spring device is integrated into the guide system by means of a lower pivot (9) which is fixed to the housing and an upper pivot (10) which is fixed to the lever (5), the upper pivot (10) being located in the proximity of the line of application (8a) of the spring force when the tray (5) is in the loading position.

3. Overhead luggage storage compartment with a lowerable tray according to Claim 2, characterized in that
- the spring device is a pneumatic spring (8).

4. Overhead luggage storage compartment with a lowerable tray according to any one of Claims 1 to 3, characterized in that
- the guide systems disposed on either side of the tray are interconnected by means of a synchronizing rod (14).

5. Overhead luggage storage compartment with a lowerable tray according to any one of Claims 1 to 4, characterized in that
- there is an active shock-absorbing element (15) between the tray end of the lever (5) and a point which is fixed rigidly relative to the housing (3).

## Revendications

1. Logement à bagages installé dans le plafond (1) comprenant un plateau pouvant être abaissé et destiné plus particulièrement à être utilisé dans des avions de transport de passagers, ledit logement présentant les caractéristiques suivantes :
- un coffret (3) en forme de caisse est ouvert vers le bas et présente deux parois latérales (4),
- le plateau (2) est relié aux parois latérales du coffret par deux systèmes de guidage disposés respectivement de chaque côté sur les parois latérales du plateau, ce dernier pouvant être basculé de même qu'un mouvement d'abaissement et un léger mouvement oscillant peuvent être réalisés, et
- un mécanisme à ressort est prévu pour chaque système de guidage,
caractérisé en ce que :
- le système de guidage se compose d'un levier (5), d'une roue dentée (13) pouvant tourner reliée au levier (5) en une position fixe et dont le point central repose sur la ligne de jonction des deux points d'attache (11, 12) du levier (5), d'un segment (7) de roue dentée, relié fixement au coffret (3) et dont le point central de la denture détermine le point d'attache (11) du levier (5) rotatif et situé sur la face du coffret, de même que d'un autre segment (6) de roue dentée, relié fixement au plateau (2) et dont le point central de la denture définit le point d'attache (12) du levier (5) rotatif et situé sur la face du plateau (2); et en ce que
- la roue dentée (13) est disposée sur la ligne de jonction des points d'attache (11, 12) du levier (5), de telle sorte que elle s'engrène avec le segment (7) de roue dentée situé sur la face du coffret et avec le segment (6) de roue dentée situé sur la face du plateau (2).

2. Logement à bagages installé dans le plafond comprenant un plateau pouvant être abaissé selon la revendication 1, caractérisé en ce que :
- le mécanisme à ressort est intégré dans le système de guidage par un point de rotation inférieur (9) fixé dans le coffret et par un point de rotation supérieur (10) fixé sur le levier (5), le point de rotation supérieur (10) étant situé à proximité de la ligne d'action (8a) du ressort dans la position de chargement du plateau (5).

3. Logement à bagages installé dans le plafond comprenant un plateau pouvant être abaissé selon la revendication 2, caractérisé en ce que un amortisseur pneumatique (8) est prévu comme mécanisme à ressort.

4. Logement à bagages installé dans le plafond comprenant un plateau pouvant être abaissé selon l'une ou l'autre des revendications 1 à 3, caractérisé en ce que les systèmes de guidage disposés de chaque côté du plateau sont reliés l'un à l'autre au moyen d'une barre de synchronisation (14).

5. Logement à bagages installé dans le plafond comprenant un plateau pouvant être abaissé selon l'une ou l'autre des revendications 1 à 4, caractérisé en ce que un élément amortisseur de chocs agit entre l'extrémité du levier (5) située sur la face du plateau et un point qui est fixe par rapport au coffret (3).
